# EUROPEAN PATENT SPECIFICATION

(11) **EP 1 426 274 B1**
(45) Date of publication and mention of the grant of the patent: **19.03.2008**
(21) Application number: 02079805.4
(22) Date of filing: 05.12.2002
(51) Int. Cl.: B62D 53/06, B60P 1/64, B60D 1/44, B62D 53/08

(54) **Mobile construction for freight transport**
Mobiler Lasttransport
Construction mobile pour le transport de fret

(43) Date of publication of application: 09.06.2004
(73) Proprietor: Renders S.A., 2453 Luxembourg (LU)
(72) Inventor: Renders, Frans, 2382 Ravels (BE)
(74) Representative: Donné, Eddy

(56) References cited:
- WO-A-96/13420
- DE-U- 20 112 589
- NL-A- 8 901 495
- NL-A- 9 302 168

## Description

This invention relates to a mobile construction for freight transport and the like, as well as to vehicle parts, constructive parts and, as for example disclosed in WO 96/13420, the like forming a part thereof.

Although the invention, in the first place, is intended for freight transport, it can, of course, also be used in other applications, for example, for bus constructions for passenger transport, and so on.

The invention aims at a mobile construction allowing different usage configurations, such due to the use of a mobile basic element which can be provided with different means for mutually coupling different vehicle parts.

To this aim, the invention relates to a mobile construction for freight transport and the like, as described by claim 1.

As, for the connection between the mobile basic element and the vehicle chassis resting thereupon, use is made of a drawbar, a simpel and efficient coupling according to the longitudinal direction can be realized, without the necessity of more complicated locking means providing for a direct connection between the frame of the mobile basic element and the vehicle chassis.

As the basic element can be brought in such a configuration that it can function as a mobile support point for a center axle-trailer, an additional interesting usage possibility is created.

In that, moreover, the theoretical support plane of the basic element can be extended, this basic element, even if this latter in its turn has a rather small length, still can be applied in combinations where a support over a longer distance is desired.

Of course, the combination of the aforementioned characteristics also allows for more possibilities, such as further will become clear from the detailed description.

The mobile construction comprises coupling means which allow that the usual coupling point of the drawbar can be connected to a point situated at the underside of the vehicle chassis.

According to an important characteristic, said drawbar is extendable in axial direction in respect to said frame of the basic element, preferably between a position whereby it is drawn-in completely or almost completely, and a position whereby it is extended over a distance. Such shifting allows for that, even when the usual coupling point of the drawbar always is connected to the vehicle chassis at the same place, the frame of the basic element still can be positioned at different positions under this vehicle chassis.

The whole thus is provided with locking means, as a result of which the drawbar can be locked in different positions in respect to the basic element, in order to thereby possibly adjust the position of the basic element in respect to the vehicle chassis.

The means by which the basic element can be mounted under a vehicle chassis in a removable manner, preferably comprise coupling means which allow that the basic element, according to the longitudinal direction, can be put into different positions in respect to the vehicle chassis, preferably by shifting, whereas the blocking itself, as aforementioned, preferably is realized by means of the drawbar, which, however, does not exclude that other locking possibilities are provided.

According to another preferred characteristic, the whole is configured such that the mobile basic element can be brought at least in such a position under the vehicle chassis that this basic element reaches up to beyond the rearmost extremity of the vehicle chassis. Thereby, it is possible to distribute the load on the respective axles of the vehicle in an efficient manner.

According to another particularly preferred characteristic, the mobile basic element also comprises means by which a semi-trailer can be pivotably attached with its front extremity to said frame, more particularly by means of a pivotable coupling, for example of the type consisting of a center plate and a king pin, or which consists of a live ring. Thereby, different possibilities for composing mobile constructions are offered, as further will become clear from the detailed description.

More particularly, it is preferred that the mobile basic element can be brought at least so far beyond the rearmost extremity of a first vehicle chassis, that said pivotable coupling is situated so far behind this first vehicle chassis that a second vehicle chassis can be pivotably appended behind the first vehicle chassis by means of this pivotable coupling.

As the mobile basic element has at least two axles, it remains standing in a stable manner in entirely uncoupled conditions. In order to be applicable also in a large number of usage possibilities where major loads have to be transported, it is, however, preferred that the basic element even is realized with three axles.

According to another particular application, the mobile basic element is configured such, in other words, is realized with such practical dimensions, that it can serve as a foremost pivotable support point of a trailer.

With the intention of better showing the characteristics of the invention, hereafter, as an example without any limitative character, several preferred forms of embodiment are described, with reference to the accompanying drawings, wherein:
figure 1 schematically represents a basic element from a mobile construction according to the invention;
figure 2 represents the basic element of figure 1 in another condition;
figures 3 to 21 schematically represent different applications of a basic element, similar to that from figures 1 and 2, in several mobile constructions.

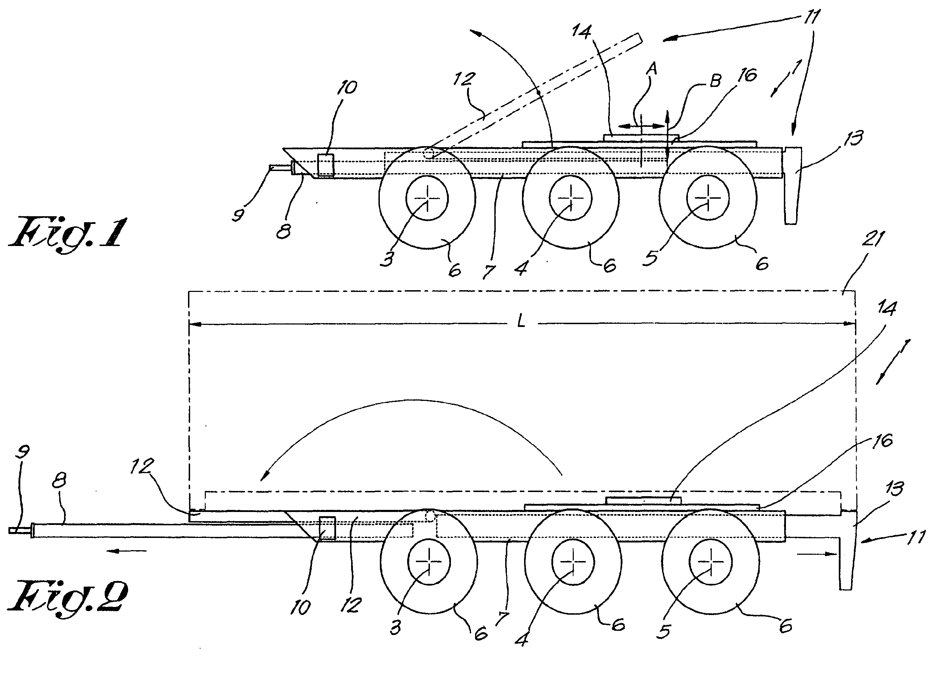

In figure 1, schematically a mobile basic element 1 according to the invention is represented, as a result of which different configurations of mobile constructions 2 can be realized, amongst others, such as represented in figures 2 to 21.

The mobile basic element 1 comprises a frame 7 supported by at least two axles, in this case, three axles 3-4-5, with respective wheels 6.

In the represented example of figures 1 and 2, the basic element 1 is equipped with a drawbar 8 which is extendable in longitudinal direction in respect to the frame 7, which preferably can be moved between a position, whereby it is completely or almost completely drawn-in, as represented in figure 1, and a position whereby it is drawn-out over a distance of preferably more than four meters, as represented in figure 2. The shifting of the drawbar 8 can be realized by mounting it in a guide in the frame 7. In consideration of the fact that this is within the range of knowledge of a person skilled in the art, this guide is not described in detail.

At its foremost extremity, the drawbar 8 is provided with a classical coupling point 9, mostly in the form of an eye.

Between the drawbar 8 and the frame 7, locking means 10 are provided, as a result of which the drawbar 8 can be blocked in different positions in respect to the basic element 1. Of course, these locking means 10 can be of different nature, and, on account of the fact that the practical realization of such locking means is considered to be within the range of knowledge of a person skilled in the art, they will not be discussed in detail.

The basis element 1 is equipped with means 11 by which the theoretical support plane of this basic element 1 can be enlarged, more particularly extended. In the represented example, these means 11, as illustrated in figure 2, consist of support parts 12, for example, support arms, which can be swung out towards the front, as well as of support parts 13 which can be drawn out towards the rear. Of course, according to a not-represented variant, use can also be made exclusively of support parts 12 which, towards the front, provide for an enlargement of the support plane, as well as use can be made exclusively of support parts 13 which, towards the rear, provide for an enlargement of this support plane.

According to the represented form of embodiment, the mobile basic element 1 also is equipped with means by which a semi-trailer can be fixed with its front extremity at the frame 7 in a pivotable manner, which means consist of a center plate 14 which can cooperate with a king pin 15. According to a variant, these means also can be realized in the form of another kind of pivotable coupling, for example, as a live ring.

As is indicated in figure 1 by arrows A and B, the position of the pivotable coupling, more particularly of the center plate 14, possibly is adjustable in respect to the frame 7, according to the longitudinal direction and/or in height. The movement in longitudinal direction, for example, is obtained in that the center plate 14 or such is movably mounted on a carriage 16 and, by means of not-represented locking means, can be blocked in different positions. The height adjustment can be realized in different ways, either by adjusting the height of the center plate 14 or such itself, or by adjusting the height of the carriage 16, or by adjusting the height of the frame 7 in respect to the wheels 6.

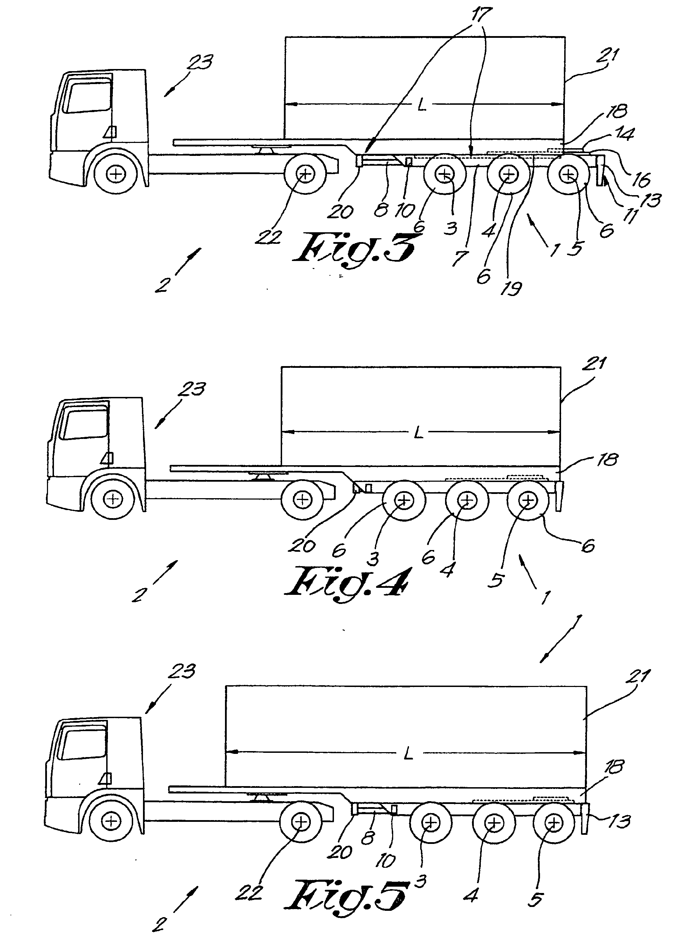

As represented in figure 3, the mobile construction comprises means 17 by which the basic element 1 can be fixed in a removable manner under a vehicle chassis 18, in this case, under a vehicle chassis 18 realized as a semi-trailer, whereby, with this fixation, at least a connection is realized by the intermediary of said drawbar 8, which connection determines the position of the basic element 1 in respect to the vehicle chassis 18. These means 17 are composed of, on one hand, coupling means 19 realizing a direct connection between the frame 7 and the vehicle chassis 18, which, however, allow for a movement of the frame 7 in longitudinal direction, and, on the other hand, coupling means 20, which allow for that the drawbar 8, at its coupling point 9, can be connected to the underside of the vehicle chassis 18, in order to thereby prevent the movement of the basic element 1 in longitudinal direction in respect to the vehicle chassis 18.

The coupling means 19 consist, for example, of elements, such as profiles and the like, which are provided at the frame 7 and the vehicle chassis 18, respectively, which mutually cooperate in such a manner that a shifting in mutual respect is possible.

The coupling means 20 may consist, for example, of a coupling element which can be compared to coupling elements which traditionally are applied for coupling a trailer, which, however, in this case is mounted against the underside of the vehicle chassis 18.

The working and the different usage possibilities of the basic element 1 and the mobile constructions 2 which can be realized therewith are explained hereafter, with reference to figures 2 to 21.

In the position of figure 2, the mobile basic element 1 can function as a mobile support point for a center-axle trailer. By a center-axle trailer, a trailer is intended which is supported centrally. Of course, then the necessary means will be provided in order to attach a loading space 21, either a container or a removable body, on the basic element 1 in this manner.

Practically seen, hereby, for supporting the loading space 21, use is made of the swung-out support parts 12 and the drawn-out support parts 13. In this manner, the loading space 21 itself can have a relatively large length. In a practical application, this length L is 20 feet, or, thus, 585.3 cm, such that a 20-feet container can be placed thereupon.

Figures 3 and 4 show an application whereby the basic element 1 is applied for supporting the rear side of a vehicle chassis 18 realized as a semi-trailer. As the drawbar 8 can be drawn-out in respect to the basic element 1, the frame 7 is movable in respect to the 18, however, the drawbar 8 at the front is fixedly attached to the vehicle chassis 18, it is clear that the basic element 1, by drawing out the drawbar 8 to a greater or lesser extent, can be moved to the front or the rear in respect to the vehicle chassis 18. By means of the locking means 10, the whole then can be blocked in a certain position.

The aforegoing allows for, for example, that the represented mobile construction, during driving, can be brought into a position as represented in figure 3, whereas, during loading and unloading, a position can be created as illustrated in figure 4. The position of figure 3 has the advantage that an optimum distribution of the load on the axles can be provided for. By placing the basic element 1 more towards the rear, thus, more weight can be brought onto the axle 22 of the tractor 23. Thereby, an optimum compromise can be adjusted between, on one hand, the overall load and, on the other hand, the axle load on each of the axles, such that, during driving, the maximally allowed values are not exceeded.

The position of figure 4 offers the advantage that the basic element 1 does not extend beyond the loading space, such that this does not hamper the loading or unloading.

It is clear that, in function of the desired combinations and of the applied lengths of vehicle chassis' and loads, different adjustments can take place in respect to the positioning of the basic element 1 under the vehicle chassis 18. This is explained by means of various examples in figures 3 to 10, wherein:
figures 3-4 represent an embodiment for a loading space 21 with a length L of 20 feet (585.3 cm);
figure 5 represent an embodiment for a loading space 21 with a length L of 782 cm (German railway standard);

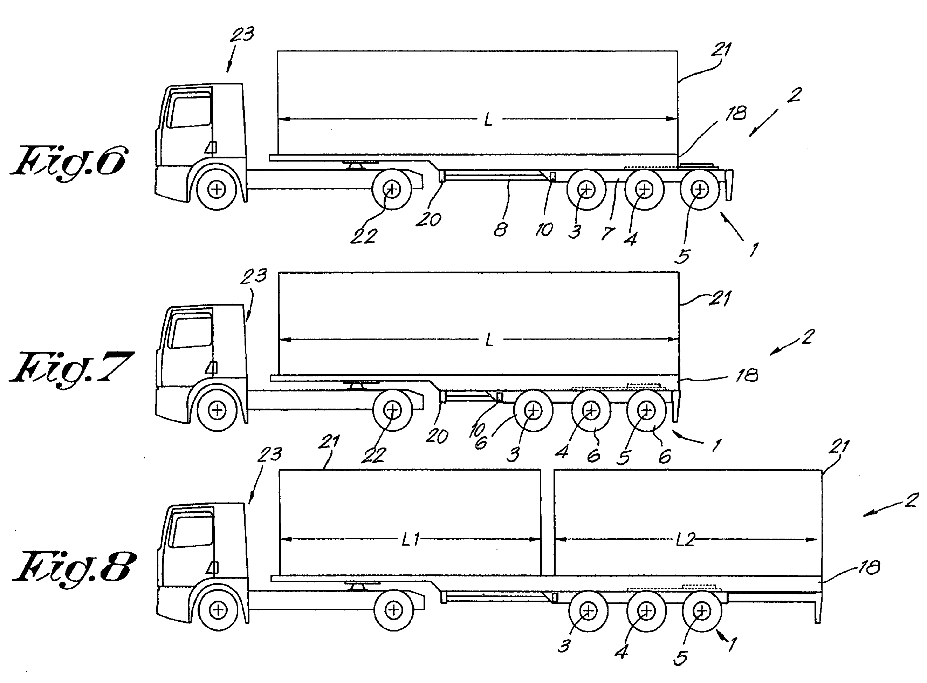

figures 6-7 represent an embodiment for a loading space 21 with a length L of 30 feet (891.8 cm);
figure 8 represents an embodiment whereby two loading spaces 21 are provided on one and the same vehicle chassis 18, both with a length, L1 and L2, respectively, of 20 feet (585.3 cm);

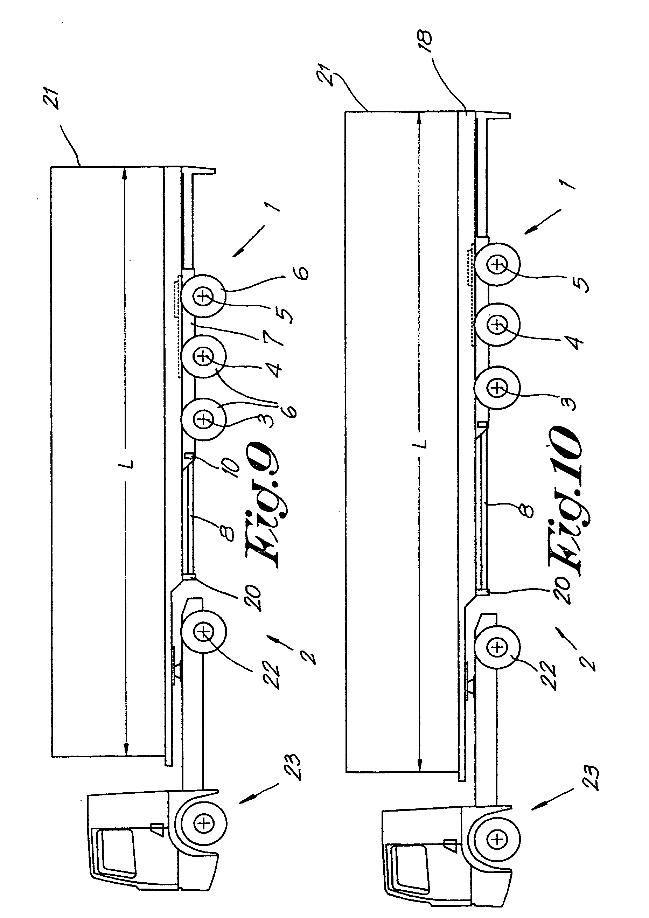

figures 9 and 10 represent another two embodiments for loading spaces 21 with a length L of 40 feet (1198.5 cm) and 1365.0 cm, respectively.

It is noted that these loading spaces 21 may consist of trailer bodies of any kind, as well as of containers.

In the application of figures 8, 9 and 10, the support parts 13 offer the advantage that the vehicle chassis 18 is well-supported even behind the wheels 6.

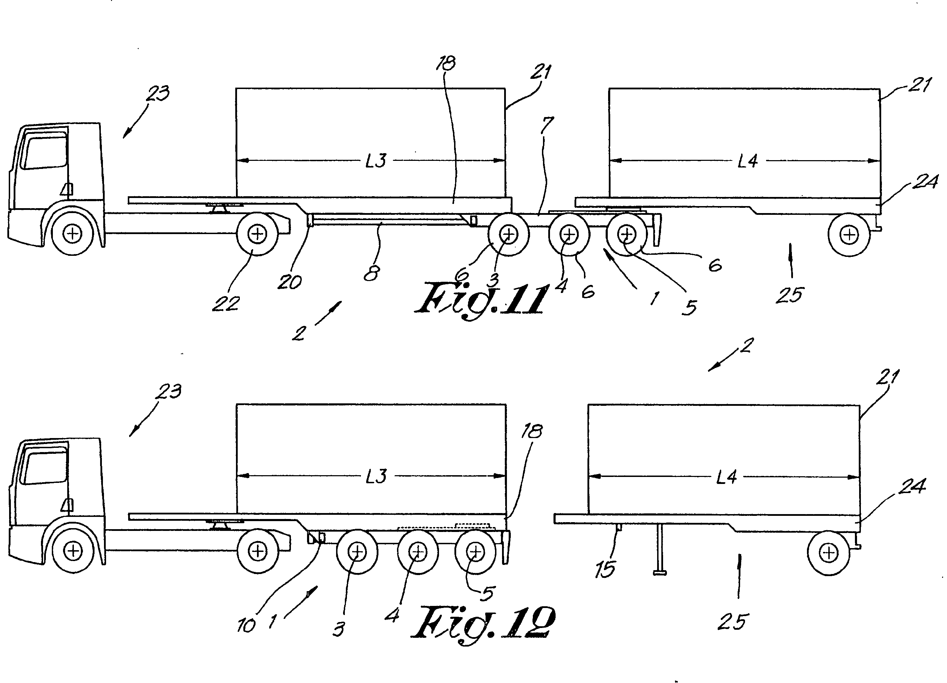

Figure 11 represents that the mobile basic element 1 possibly can be drawn out to the rear from under the vehicle chassis 18, such that it reaches up to beyond the rear extremity of the vehicle chassis 18. This allows that, at the vehicle chassis 18, a second vehicle chassis 24 of another vehicle part 25, which also is realized as a semi-trailer, can be attached, by means of said center plate 14 or the like.

During a transport over large distances, then, for example, it is possible to drive with the combination, such as illustrated in figure 11, whereas, during loading and unloading, or when realizing a local distribution, an uncoupling can be provided for, such as illustrated in figure 12, whereby the vehicle parts realized as semitrailers then can be driven separately by means of the tractor 23.

Here, too, of course different combinations are possible, as, for example, is represented schematically in figures 11 to 20, wherein:
figures 11-12 represent a configuration with loading spaces 21 with lengths L3 and L4 of 20 feet (585.3 cm) each;

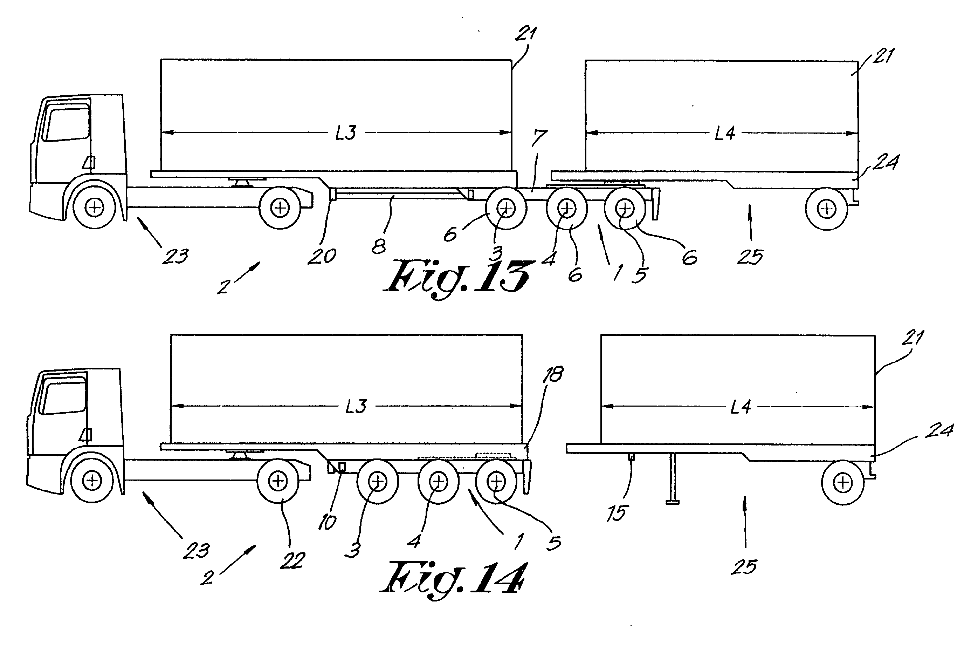

figures 13-14 represent a configuration with loading spaces 21 with lengths L3 and L4 of 782.0 cm and 20 feet (585.3 cm), respectively;

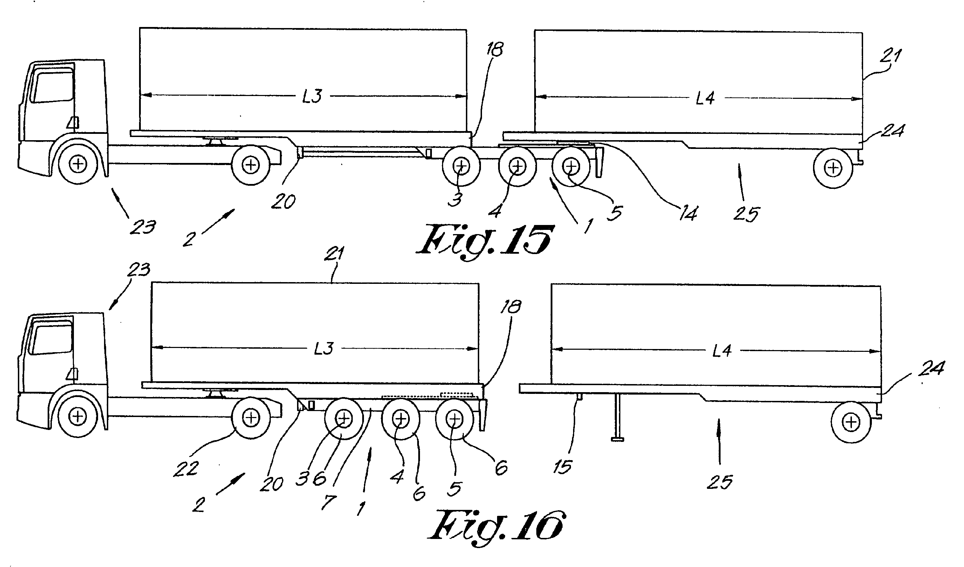

figures 15-16 represent an application with lengths L3 and L4 of both 782.0 cm;

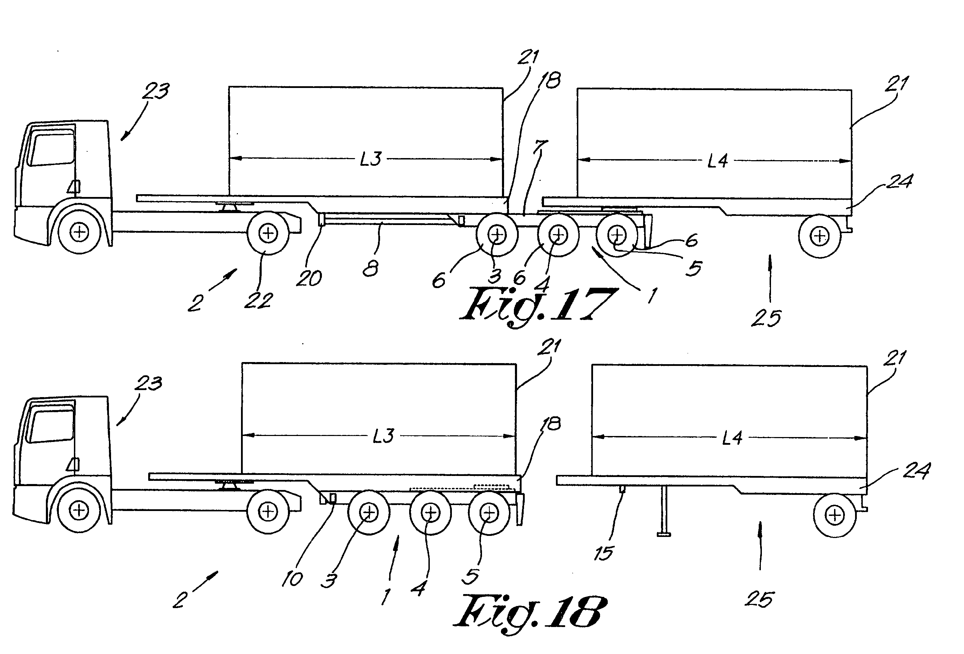

figures 17-18 represent an application, comparable to that of figures 11 and 12, with the only difference that the rearmost vehicle part is two-axled, as a result of which heavier loads can be transported;

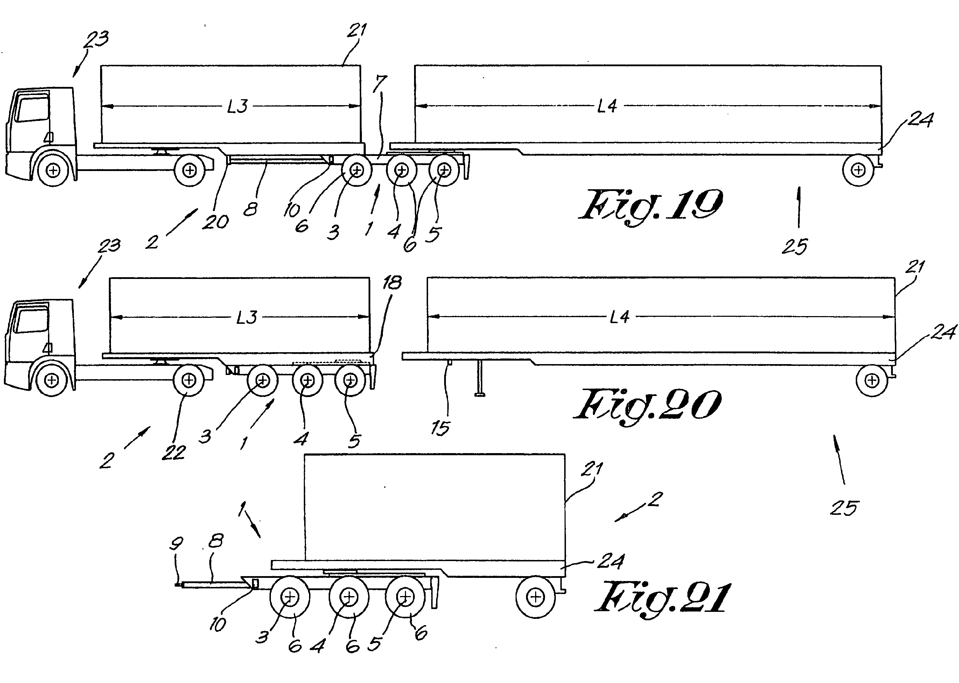

figures 19-20 represent an application with lengths L3 and L4 of 782.0 cm and 1370.0 cm, respectively.

Figure 21 represents still another possibility which shows that the mobile basic element 1 also may serve as a foremost pivotable support point for a trailer.

Of course, other combinations are possible, too. The above-represented examples, however, show that certainly at least a large number of combinations is possible with loading spaces and/or containers having dimensions which are customary in different countries.

The present invention is in no way limited to the forms of embodiment described as an example and represented in the figures; on the contrary, such mobile construction can be realized in different forms and dimensions, without leaving the scope of the invention.

Of course, the invention also relates to all vehicle parts comprising special provisions in order to cooperate with a basic element 1 according to the invention.

Finally, it is noted that by the term "drawbar", a central drawing or pushing bar, pipe, respectively, can be intended, as well as a drawing triangle or such.

## Claims

1. Mobile construction for freight transport and the like, comprising a mobile basic element (1), with a frame (7) supported by at least two axles, **characterized in that** this mobile basic element (1) is multi-functional and, to this aim, is provided with one or with a combination of two or more of the following means:
- means (17) by which the basic element (1) can be removably attached under a chassis (18), more particularly, under a vehicle chassis (18) realized as a semi-trailer or trailer, whereby, with this attachment, at least a connection by the intermediary of a drawbar (8) is realized, which connection determines the position of the basic element (1) in respect to the vehicle chassis (18);
- means by which the basic element (1) can be brought into such a configuration that it can function as a mobile support point for a center axle-trailer; and
- means (11) by which the theoretical support plane of the basic element (1) can be extended, either towards the front, or towards the rear; or both towards the front and the rear, **characterized in that** the mobile construction comprises coupling means (20) which allow that the usual coupling point (9) of the drawbar (8) can be connected to the underside of the vehicle chassis (18) **in that** axial direction in respect to said frame (7) of the basic element (1), preferably between a position where it is drawn-in completely or almost completely, and a position whereby it is extended over a distance and **in that** the mobile construction is further provided with locking means (10), as a result of which the drawbar (8) can be locked in different positions in respect to the basic element (1), in order to thereby possibly adjust the position of the basic element (1) in respect to the vehicle chassis (18).

2. Mobile construction according to claim 1, **characterized in that** the drawbar (8) is extendable over a distance of more than four meters.

3. Mobile construction according to any of the preceding claims, **characterized in that** the means (17) by which the basic element (1) can be mounted under a vehicle chassis (18) in a removable manner, comprise coupling means (19) which allow that the basic element (1), according to the longitudinal direction, can be put into different positions in respect to the vehicle chassis (18), preferably by -shifting.

4. Mobile construction according to claim 3, **characterized in that** the mobile basic element (1) can be coupled to the vehicle chassis (18) at least such that it reaches up to beyond the rearmost extremity of the vehicle chassis (18).

5. Mobile construction according to any of the preceding Claims, **characterized in that** the mobile basic element (1) also comprises means by which a semi-trailer can be pivotably attached with its front extremity to said frame (7), more particularly by means of a pivotable coupling, for example, of the type consisting of a center plate (14) and a king pin (15), or which consists of a live ring.

6. Mobile construction according to claims 4 and 5, **characterized in that** the mobile basic element (1) can be brought at least so far beyond the rearmost extremity of a first vehicle chassis (18), that said pivotable coupling is situated so far behind this first vehicle chassis (18) that a second vehicle chassis (24) can be pivotably appended behind the first vehicle chassis (18) by means of this pivotable coupling.

7. Mobile construction according to claim 5 or 6, **characterized in that** the position of the pivotable coupling in respect to the frame (7) of the mobile basic element (1) can be adjusted according to the longitudinal direction and/or in height.

8. Mobile construction according to any of the preceding claims, **characterized in that** the means (11) by which the theoretical support plane of the basic element (1) can be extended, at least comprise support parts (12) which can be swung-out towards the front.

9. Mobile construction according to any of the preceding claims, **characterized in that** the means (11) b which the theoretical support plane of the basic element (1) can be extended, at least comprise support parts (13) which can be drawn-out towards the rear.

10. Mobile construction according to any of the preceding claims, **characterized in that** the means (11) by which the theoretical support plane of the basic element (1) can be extended, comprise support parts (13) providing for an extension towards the rear, which allow that the mobile basic element (1), in a forwardly extended position, can be positioned under the rearmost extremity of a vehicle chassis (18).

11. Mobile construction according to any of the preceding claims, **characterized in that** it is realized with three axles.

12. Mobile construction according to any of the preceding claims, **characterized in that** the mobile basic element (1) is configured such that it can serve as a foremost pivotable support point of a trailer.

## Patentansprüche

1. Mobile Konstruktion für Frachttransport und dergleichen, die ein mobiles Basiselement (1) umfasst, mit einem von mindestens zwei Achsen getragenen Gestell (7), **dadurch gekennzeichnet, dass** dieses mobile Basiselement (1) mehrfunktional ist und zu diesem Zweck mit einem oder einer Kombination von zwei oder mehr der folgenden Mittel versehen ist:
- Mitteln (17), wodurch das Basiselement (1) lösbar unter einem Fahrzeugchassis (18), spezieller unter einem als Auflieger oder Anhänger ausgeführten Fahrzeugchassis (18), befestigt werden kann, wobei bei dieser Befestigung mindestens eine Verbindung durch Dazwischentreten einer Deichsel (8) verwirklicht ist, welche Verbindung die Position des Basiselements (1) in Bezug auf das Fahrzeugchassis (18) bestimmt;
- Mitteln, wodurch das Basiselement (1) in eine solche Konfiguration gebracht werden kann, sodass es als mobiler Stützpunkt für einen Mittelachsanhänger fungieren kann; und
- Mitteln (11), wodurch die theoretische Stützebene des Basiselements (1) verlängert werden kann, entweder nach vorn oder nach hinten, oder sowohl nach vorn als auch nach hinten,
**dadurch gekennzeichnet, dass** die mobile Konstruktion Koppelmittel (20) umfasst, die zulassen, dass der übliche Ankopplungspunkt (9) der Deichsel (8) mit der Unterseite des Fahrzeugchassis (18) verbunden werden kann, und dass besagte Deichsel (8) in Bezug auf das Gestell (7) des Basiselements (1) in axialer Richtung ausschiebbar ist, bevorzugt zwischen einer Position, worin sie vollständig oder nahezu vollständig eingeschoben ist, und einer Position, wobei sie über einen Abstand ausgeschoben ist, und **dadurch**, dass die 5 mobile Konstruktion weiter mit Verriegelungsmitteln (10) versehen ist, wodurch die Deichsel (8) in verschiedenen Positionen in Bezug auf das Basiselement (1) blockiert werden kann, um **dadurch** eventuell die Position des Basiselements (1) in Bezug auf das Fahrzeugchassis (18) einzustellen.

2. Mobile Konstruktion nach Anspruch 1, **dadurch gekennzeichnet, dass** die Deichsel (8) über einen Abstand von mehr als vier Metern verlängerbar ist.

3. Mobile Konstruktion nach einem der vorgenannten Ansprüche, **dadurch gekennzeichnet, dass** die Mittel (17), durch die das Basiselement (1) lösbar unter einem Fahrzeugchassis (18) montiert werden kann, Koppelmittel (19) umfassen, die zulassen, dass das Basiselement (1) in Längsrichtung in verschiedene Positionen in Bezug auf das Fahrzeugchassis (18) versetzt werden kann, bevorzugt durch Verschieben.

4. Mobile Konstruktion nach Anspruch 3, **dadurch gekennzeichnet, dass** das mobile Basiselement (1) mindestens so an das Fahrzeugchassis (18) gekoppelt werden kann, dass es bis über das hintere Ende des Fahrzeugchassis (18) hinaus reicht.

5. Mobile Konstruktion nach einem der vorgenannten Ansprüche, **dadurch gekennzeichnet, dass** das mobile Basiselement (1) auch Mittel umfasst, durch die ein Anhänger mit seinem vorderen Ende schwenkbar an dem Gestell (7) befestigt werden kann, spezieller mittels einer Drehkupplung, beispielsweise des aus einer Drehpfanne (14) und einen Sattelzapfen (15) bestehenden Typs, oder die aus einem Drehkranz besteht.

6. Mobile Konstruktion nach den Ansprüchen 4 und 5, **dadurch gekennzeichnet, dass** das mobile Basiselement (1) mindestens so weit über das hintere Ende eines ersten Fahrzeugchassis (18) hinaus gebracht werden kann, dass besagte Drehkupplung sich so weit hinter diesem ersten Fahrzeugchassis (18) befindet, dass mittels dieser Drehkupplung ein zweites Fahrzeugchassis (24) schwenkbar hinter dem ersten Fahrzeugchassis (18) angehängt werden kann.

7. Mobile Konstruktion nach Anspruch 5 oder 6, **dadurch gekennzeichnet, dass** die Position der Drehkupplung in Bezug auf das Gestell (7) des mobilen Basiselements (1) gemäß der Längsrichtung und/oder in der Höhe eingestellt werden kann.

8. Mobile Konstruktion gemäß einem der vorgenannten Ansprüche, **dadurch gekennzeichnet, dass** die Mittel (11), womit die theoretische Stützebene des Basiselements (1) verlängert werden kann, mindestens Stützteile (12) umfassen, die nach vorn ausgeklappt werden können.

9. Mobile Konstruktion nach einem der vorgenannten Ansprüche, **dadurch gekennzeichnet, dass** die Mittel (11), womit die theoretische Stützebene des Basiselements (1) verlängert werden kann, mindestens Stützteile (13) umfassen, die nach hinten ausgeschoben werden können.

10. Mobile Konstruktion nach einem der vorgenannten Ansprüche, **dadurch gekennzeichnet, dass** die Mittel (11), womit die theoretische Stützebene des Basiselements (1) verlängert werden kann, mindestens Stützteile (13) umfassen, die für eine Verlängerung nach hinten sorgen, die zulassen, dass das mobile Basiselement (1) in einer nach vorn geschobenen Position unter dem hinteren Ende eines Fahrzeugchassis (18) positioniert werden kann.

11. Mobile Konstruktion nach einem der vorgenannten Ansprüche, **dadurch gekennzeichnet, dass** sie mit drei Achsen ausgeführt ist.

12. Mobile Konstruktion nach einem der vorgenannten Ansprüche, **dadurch gekennzeichnet, dass** das mobile Basiselement (1) so konfiguriert ist, dass es als vorderster drehbarer Stützpunkt eines Anhängers dienen kann.

## Revendications

1. Structure mobile pour le transport de fret et analogue, comprenant un élément de base mobile (1) comportant un cadre (7) supporté par au moins deux trains de roues, **caractérisée en ce que** cet élément de base mobile (1) est multifonctionnel et, à cet effet, est muni d'un des moyens suivants ou d'une combinaison de deux des moyens suivants ou plus :
- un moyen (17) par lequel l'élément de base (1) peut venir se fixer de manière amovible en dessous d'un châssis (18), plus particulièrement en dessous d'un châssis de véhicule (18) réalisé sous la forme d'un semi-remorque ou d'une remorque ; avec cette fixation, on obtient au moins une liaison par l'intermédiaire d'une barre d'attelage (8), ladite liaison déterminant la position de l'élément de base (1) par rapport au châssis (18) du véhicule ;
- un moyen par lequel l'élément de base (1) peut être amené dans une configuration telle qu'il peut faire office de point de support mobile pour une remorque à train de roues central ;
- un moyen (11) par lequel le plan de support théorique de l'élément de base (1) peut être prolongé, soit vers l'avant, soit vers l'arrière, ou encore vers l'avant et vers l'arrière,
**caractérisée en ce que** la structure mobile comprend des moyens de couplage (20) qui permettent de relier le point d'attelage habituel (9) de la barre d'attelage (8) en dessous du châssis (18) du véhicule, et **en ce que** ladite barre d'attelage (8) peut s'étendre en direction axiale par rapport audit cadre (7) de l'élément de base (1), de préférence entre une position dans laquelle elle est rentrée complètement ou presque complètement et une position dans laquelle elle s'étend sur une certaine distance, et **en ce que** la structure mobile est en outre munie de moyens de verrouillage (10), si bien que la barre d'attelage (8) peut être verrouillée dans différentes positions par rapport à l'élément de base (1) pour pouvoir ainsi régler la position de l'élément de base (1) par rapport au châssis (18) du véhicule.

2. Structure mobile selon la revendication 1, **caractérisée en ce que** la barre d'attelage (8) peut s'étendre sur une distance de plus de 4 mètres.

3. Structure mobile selon l'une quelconque des revendications précédentes, **caractérisée en ce que** les moyens (17) par lesquels l'élément de base (1) peut être monté en dessous d'un châssis (18) de véhicule d'une manière amovible, comprennent des moyens de couplage (19) qui permettent de mettre l'élément de base (1), en direction longitudinale, dans des positions différentes par rapport au châssis (18) du véhicule, de préférence par déplacement.

4. Structure mobile selon la revendication 3, **caractérisée en ce que** l'élément de base mobile (1) peut être couplé au châssis (18) du véhicule au moins de telle sorte qu'il s'étende jusqu'à un endroit situé au-delà de l'extrémité. la plus arrière du châssis (18) du véhicule.

5. Structure mobile selon l'une quelconque des revendications précédentes, **caractérisée en ce que** l'élément de base mobile (1) comprend également des moyens par lesquels le semi-remorque peut venir se fixer en pivotement avec son extrémité avant audit cadre (7), plus particulièrement au moyen d'un couplage pivotant, par exemple du type constitué par une plaque centrale (14) et par un pivot d'attelage (15), ou bien qui est constitué par un palier commandé.

6. Structure mobile selon les revendications 4 et 5, **caractérisée en ce que** l'élément de base mobile (1) peut être amené au moins jusqu'à un endroit situé au-delà de l'extrémité la plus arrière d'un premier châssis de véhicule (18), **en ce que** ledit couplage pivotant est situé à ce point à l'arrière de ce premier châssis de véhicule (18) qu'un deuxième châssis de véhicule (24) peut être adjoint par pivotement derrière le premier châssis de véhicule (18) au moyen de ce couplage pivotant.

7. Structure mobile selon la revendication 5 ou 6, **caractérisée en ce que** la position du moyen de couplage pivotant par rapport au cadre (7) de l'élément de base mobile (1) peut être réglée dans la direction longitudinale et/ou en hauteur.

8. Structure mobile selon l'une quelconque des revendications précédentes, **caractérisée en ce que** les moyens (11) par lesquels le plan de support théorique de l'élément de base (1) peut être prolongé, comprend au moins des pièces de support (12) que l'on peut amener vers l'avant par basculement.

9. Structure mobile selon l'une quelconque des revendications précédentes, **caractérisée en ce que** les moyens (11) par lesquels le plan de support théorique de l'élément de base (1) peut être prolongé, comprend au moins des pièces de support (13) que l'on peut amener vers l'arrière par traction.

10. Structure mobile selon l'une quelconque des revendications précédentes, **caractérisée en ce que** les moyens (11) par lesquels le plan de support théorique de l'élément de base (1) peut être prolongé, comprend des pièces de support (13) procurant un prolongement vers l'arrière, qui permettent à l'élément de base mobile (1), dans une position prolongée vers l'avant, de venir se disposer en dessous de l'extrémité la plus arrière d'un châssis de véhicule (18).

11. Structure mobile selon l'une quelconque des revendications précédentes, **caractérisée en ce qu'**elle est réalisée avec trois trains de roues.

12. Structure mobile selon l'une quelconque des revendications précédentes, **caractérisée en ce que** l'élément de base mobile (1) est configuré de telle sorte qu'il peut faire office de point de support pivotant d'une remorque, situé le plus avant.
